# EUROPEAN PATENT SPECIFICATION

(11) **EP 2 646 504 B1**
(45) Date of publication and mention of the grant of the patent: **12.10.2016**
(21) Application number: 11815577.9
(22) Date of filing: 01.12.2011
(51) Int. Cl.: C08K 3/36, C08K 5/20, C08L 21/02

(54) **METHOD OF PRODUCING A RUBBER MIX WITH LARGE-AREA REINFORCING FILLERS**
VERFAHREN ZUR HERSTELLUNG EINER KAUTSCHUKMISCHUNG MIT GROSSFLÄCHIGEN VERSTÄRKUNGSFÜLLERN
PROCÉDÉ DE PRODUCTION D'UN MÉLANGE DE CAOUTCHOUC COMPORTANT DES CHARGES RENFORÇANTES À GRANDE SURFACE DE CONTACT

(30) Priority: 01.12.2010 IT TO20100959
(43) Date of publication of application: 09.10.2013
(73) Proprietor: Bridgestone Corporation, Tokyo 104-8340 (JP)
(72) Inventor: COTUGNO, Salvatore, I-00131 Roma (IT); CARONE, Enrico, I-00055 Ladispoli (IT)
(74) Representative: Marchetti, Alessio
(86) International application number: PCT/IB2011/055418
(87) International publication number: WO 2012/073219

(56) References cited:
- DE-A1- 19 814 839

## Description

### TECHNICAL FIELD

The present invention relates to a method of producing a rubber mix with large-area reinforcing fillers. More specifically, the present invention relates to the production of a mix comprising large-area silica, to which the following description refers purely by way of example.

### BACKGROUND ART

As is known, many rubber mixes are produced using reinforcing fillers, such as carbon black or silica, to obtain a finished product with specific mechanical characteristics.

To do this, it is essential that the reinforcing filler be dispersed evenly in the polymer base, and, therefore, that mixing be performed as efficiently as possible.

Mixing is normally performed in mechanical Banbury mixers.

It has long been known that the physical characteristics of reinforcing fillers, such as area and particle size, may seriously affect the mechanical properties of the mix. For example, in the tyre industry, large-area and/or fine particle size silica is known to improve the mix in terms of wear and rolling resistance.

Another important point to note is that a reinforcing filler capable of producing a mix of superior mechanical properties may also be used in smaller amounts, thus reducing the specific weight of the mix as a whole.

At present, large-area and/or fine particle size silica is difficult to use on an industrial scale, for reasons of workability of the mix. That is, the larger the area and the finer the particle size of the silica are, the more viscous the mix is to work, with the result that mixing takes longer and the mixer has to work harder, with obvious drawbacks in terms of output and power consumption.

In short, silica with a larger area and finer particle size improves the mechanical properties of the cured mix, but also greatly increases the viscosity of the green mix. More specifically, silica with an area of over 220 m²/g may render the mix completely unworkable, if mixed the conventional way in a Banbury mixer (closed-chamber mixing) and/or in mills (open-chamber mixing). Also, mixing problems often result in poor dispersion of the silica in the elastomer matrix, thus resulting in poor properties and wear resistance.

As will be clear to anyone skilled in the art, the difficulty encountered in using silica, which otherwise could have major advantages in terms of performance of the finished mix, is a serious limitation in the manufacture of numerous rubber products.

### DISCLOSURE OF INVENTION

It is an object of the present invention to provide a method of producing rubber mixes, that can employ large-area and/or fine particle size reinforcing fillers, without incurring the drawbacks of the known art.

According to the present invention, there is provided a method of producing rubber mixes, comprising a step of mixing a reinforcing filler with a cross-linkable, unsaturated-chain polymer base; said method being characterized in that said mixing step is performed in the aqueous phase, and said reinforcing filler has a surface area of over 220 m²/g, and a particle size of less than 0.1 µm; said aqueous phase comprising curing agents and a surface-active agent of molecular formula (I)

(R₁CONR₂CHR₃COO⁻)n Xⁿ⁺ (I)

where :
R₁ is an aliphatic group C₄-C₂₀
R₂ is H or an aliphatic group C₁-C₈
R₃ is H or an aliphatic or aromatic group C₁-C₈
X is a metal cation, preferably an alkaline cation, and
n is an integer of 1 to 3.

### BEST MODE FOR CARRYING OUT THE INVENTION

In a preferred embodiment, said mixing step comprises adding an aqueous suspension of reinforcing filler to a latex of the cross-linkable, unsaturated-chain polymer base.

In a preferred embodiment, the reinforcing filler is silica.

Preferably, the aliphatic group R₁ comprises a double bond.

Preferably, the surface-active agent of molecular formula (I) is the compound CH₃(CH₂)₇CHCH(CH₂)₇CONHCH₂COO⁻ X⁺ or the compound CH₂CH(CH₂)₈CONHCH₂COO⁻ X⁺.

Preferably, the alkaline cation X⁺ is Na⁺.

The following are non-limiting examples for a clearer understanding of the invention.

### EXAMPLES

Four mixes A₁-A₄ with the compositions in phr shown in Table I were produced according to the invention; and a control mix A_{ctrl} with the composition in phr shown in Table I was produced using the traditional mechanical Banbury mixer method. The control mix differed from those of the invention solely as regards the type of silica used and the absence of a surface-active agent. If the control mix were to be produced using the same silica as in the invention mixes, the area and particle size of the silica would result in such a high viscosity of the control mix as to make it difficult to mix.

**TABLE I**

| | A₁ | A₂ | A₃ | A₄ | A_{ctrl} |
|---|---|---|---|---|---|
| NR (latex) | 100 | 100 | 100 | 100 | 100 |
| Silica* dispersed in water | 80 | 80 | 80 | 80 | -- |
| Silica** | -- | -- | -- | -- | 80 |
| Silane | 0 | 3 | 6 | 10 | 15 |
| Sulphur | 2 | 2 | 2 | 2 | 2 |
| Zn oxide | 3 | 3 | 3 | 3 | 3 |
| MBTS | 2 | 2 | 2 | 2 | 2 |
| Surface-active agent (a) | 0.5 | 0.5 | 0.5 | -- | -- |
| Surface-active agent (b) | -- | -- | -- | 0.5 | -- |

In Table I, the quantity of silica* refers to the dry silica in the aqueous dispersion, and the silica* used has an area of 330 m²/g, and a particle size of 7 nm.

The silica** used has an area of 200 m²/g, and a particle size of 0.2 µm.

In the invention mixes (A₁-A₄), silane was added to the completely dry mix, i.e. after the in-water mixing stage, and more specifically in an open mill.

Surface-active agent (a) was the compound CH₃(CH₂)₇CHCH(CH₂)₇CONHCH₂COO⁻ Na⁺; and surface-active agent (b) the compound CH₂CH (CH₂)₈CONHCH₂COO⁻ Na⁺.

Unlike the control mix produced using the conventional method, the invention mixes were produced as follows :
- mixing step : all the ingredients were dispersed simultaneously in water; and the resulting aqueous solution was first agitated mechanically, and then sonicated to form an aqueous emulsion. As shown in Table I, natural rubber was added in the form of latex, and silica in the form of an aqueous dispersion.
- settling step : the aqueous emulsion was allowed to settle for 60 minutes, until a clearly distinguishable rubber mix in water was formed;
- separation step : the rubber mix was separated by filtering, possibly followed by drying.

The settling step is preferable, but not essential if appropriate concentrations of surface-active agents are employed.

The mixing step may differ from the one described above. That is, a number of emulsions, each comprising one ingredient of the mix and an appropriate quantity of surface-active agent, may be produced, and subsequently combined into one emulsion, which is then mixed to form the rubber mix in water.

### Laboratory testing

The resulting mixes were subjected to rheometric testing as per ASTM Standard D5289 at a temperature of 160°C, and to dynamic physical testing as per ASTM Standard D5279 at 25°C temperature and 50 Hz frequency.

The test results are shown in Table II. The MH and ML values are expressed in dN*m; T'10, T'50 and T'90 in minutes; and physical properties in MPa.

Table II also shows the dispersion index values.

The dispersion index is the ratio 100 x ΔE'/E'_{0.1%strain}, where ΔE' equals E'_{0.1%strain}-E'_{4.0%strain}. The lower the dispersion index is, the better the silica is dispersed in the polymer matrix.

**TABLE II**

| | A₁ | A₂ | A₃ | A₄ | A_{ctrl} |
|---|---|---|---|---|---|
| ML | 12.7 | 10.1 | 8.7 | 7.3 | 9.3 |
| MH | 29.0 | 24.1 | 23.0 | 21.8 | 35.9 |
| T'50 | 0.5 | 0.7 | 1.0 | 1.4 | 3,4 |
| T'90 | 1.1 | 1.4 | 2.1 | 5.1 | 16.7 |
| Dispersion index | 38 | 35 | 30 | 28 | 100 |

Alternatively, the method according to the invention may comprise only mixing the reinforcing filler and polymer base in the aqueous phase, followed by mechanical mixing in a Banbury mixer, in which the other mix ingredients are added to the polymer/silica base mix produced at the in-water mixing stage. More specifically, the polymer/silica base mix produced at the in-water mixing stage is separated from the liquid phase and dried, and is then reloaded into the Banbury mixer, where the other ingredients are added to produce the finished mix.

The method according to the invention has the major advantage of enabling use of reinforcing fillers capable of greatly improving the mechanical properties of the mix, and/or enabling a reduction in the amount of reinforcing filler in the mix, thus reducing the specific weight of the mix. In fact, mixing in water poses no viscosity problems.

The method according to the invention also provides for better dispersing the reinforcing fillers in the polymer base.

Lastly, the method according to the invention provides for considerable energy saving by employing no, or only marginally employing, electrically powered mixing devices.

## Claims

1. A method of producing rubber mixes, comprising a step of mixing a reinforcing filler with a cross-linkable, unsaturated-chain polymer base; said method being **characterized in that** said mixing step is performed in the aqueous phase, and said reinforcing filler has a surface area of over 220 m²/g, and a particle size of less than 0.1 µm; said aqueous phase comprising curing agents and a surface-active agent of molecular formula (I)
(R₁CONR₂CHR₃COO⁻)n Xⁿ⁺
where
R₁ is an aliphatic group C₄-C₂₀
R₂ is H or an aliphatic group C₁-C₈
R₃ is H or an aliphatic or aromatic group C₁-C₈
X is a metal cation
n is an integer of 1 to 3.

2. A method of producing rubber mixes, as claimed in Claim 1, **characterized in that** said mixing step comprises adding an aqueous suspension of reinforcing filler to a latex of the cross-linkable, unsaturated-chain polymer base.

3. A method of producing rubber mixes, as claimed in Claim 1 or 2, **characterized in that** the reinforcing filler is silica.

4. A method of producing rubber mixes, as claimed in Claim 1, **characterized in that** the aqueous aliphatic group R₁ comprises a double bond.

5. A method of producing rubber mixes, as claimed in Claim 4, **characterized in that** the surface-active agent of molecular formula (I) is the compound CH₃(CH₂)₇CHCH(CH₂)₇CONHCH₂COO⁻ X⁺ or the compound CH₂CH (CH₂)₈CONHCH₂COO⁻ X⁺.

6. A method of producing rubber mixes, as claimed in Claim 1, **characterized in that** the metal cation X⁺ is Na⁺.

7. A rubber mix comprising a large-area reinforcing filler, **characterized by** being produced using the method as claimed in one of the foregoing Claims.

8. A rubber mix as claimed in Claim 7, **characterized in that** said reinforcing filler is silica.

9. A rubber mix as claimed in Claim 8, **characterized in that** the silica has a surface area of over 220 m²/g and a particle size of less than 0.1 µm.

10. A tyre, **characterized by** comprising at least one portion made from the mix as claimed in one of Claims 7 to 9.

## Patentansprüche

1. Verfahren zum Herstellen von Gummimischungen, umfassend einen Schritt des Mischens eines verstärkenden Füllstoffs mit einer vernetzbaren, kettenungesättigten Polymerbasis; wobei das Verfahren **dadurch gekennzeichnet ist, dass** der Mischungsschritt in der wässrigen Phase durchgeführt wird und der verstärkende Füllstoff einen Oberflächenbereich von über 220 m²/g und eine Teilchengröße von weniger als 0,1 µm aufweist; wobei die wässrige Phase Härtungsmittel und ein oberflächenaktives Mittel der Molekularformel (I) umfasst
(R₁CONR₂CHR₃COO⁻)n Xⁿ⁺
worin :
R₁ eine aliphatische Gruppe C₄-C₂₀ ist
R₂ H oder eine aliphatische Gruppe C₁-C₈ ist
R₃ H oder eine aliphatische oder aromatische Gruppe C₁-C₈ ist
X ein Metallkation ist
n eine ganze Zahl von 1 bis 3 ist.

2. Verfahren zum Herstellen von Gummimischungen nach Anspruch 1, **dadurch gekennzeichnet, dass** der Mischungsschritt Zugeben einer wässrigen Suspension von verstärkendem Füllstoff zu einem Latex der vernetzbaren, kettenungesättigten Polymerbasis umfasst.

3. Verfahren zum Herstellen von Gummimischungen nach Anspruch 1 oder 2, **dadurch gekennzeichnet, dass** der verstärkende Füllstoff Kieselerde ist.

4. Verfahren zum Herstellen von Gummimischungen nach Anspruch 1, **dadurch gekennzeichnet, dass** die aliphatische Gruppe R₁ eine Doppelbindung umfasst.

5. Verfahren zum Herstellen von Gummimischungen nach Anspruch 4, **dadurch gekennzeichnet, dass** das oberflächenaktive Mittel von Molekularformel (I) die Verbindung CH₃(CH₂)₇CHCH(CH₂)₇CONHCH₂COO⁻X⁺ oder die Verbindung CH₂CH(CH₂)₈CONHCH₂COO⁻ X⁺ ist.

6. Verfahren zum Herstellen von Gummimischungen nach Anspruch 1, **dadurch gekennzeichnet, dass** das Metallkation X⁺ Na⁺ ist.

7. Gummimischung, umfassend einen verstärkenden Füllstoff großer Fläche, **gekennzeichnet durch** hergestellt werden unter Verwendung des Verfahrens nach einem der vorstehenden Ansprüche.

8. Gummimischung nach Anspruch 7, **dadurch gekennzeichnet, dass** der verstärkende Füllstoff Kieselerde ist.

9. Gummimischung nach Anspruch 8, **dadurch gekennzeichnet, dass** die Kieselerde einen Oberflächenbereich von über 220 m²/g und eine Teilchengröße von weniger als 0,1 µm aufweist.

10. Reifen, **gekennzeichnet durch** Umfassen mindestens eines aus der Mischung nach einem der Ansprüche 7 bis 9 gefertigten Abschnitts.

## Revendications

1. Procédé de production de mélanges de caoutchouc, comprenant une étape de mélange d'une charge renforçante avec une matrice polymère réticulable à chaîne insaturée ; ledit procédé étant **caractérisé en ce que** ladite étape de mélange est réalisée en phase aqueuse, et ladite charge renforçante a une surface de contact supérieure à 220 m²/g et une taille de particule inférieure à 0,1 µm ; ladite phase aqueuse comprenant des agents de durcissement et un agent tensioactif de formule moléculaire (I)
(R₁CONR₂CHR₃COO⁻)n Xⁿ⁺
dans laquelle :
R₁ est un groupe aliphatique de C₄ à C₂₀
R₂ est H ou un groupe aliphatique de C₁ à C₈
R₃ est H ou un groupe aliphatique ou aromatique de C₁ à C₈
X est un cation métallique
n est un nombre entier de 1 à 3.

2. Procédé de production de mélanges de caoutchouc selon la revendication 1, **caractérisé en ce que** ladite étape de mélange comprend l'ajout d'une suspension aqueuse de charge renforçante à un latex de la matrice polymère réticulable à chaîne insaturée.

3. Procédé de production de mélanges de caoutchouc selon la revendication 1 ou 2, **caractérisé en ce que** la charge renforçante est de la silice.

4. Procédé de production de mélanges de caoutchouc selon la revendication 1, **caractérisé en ce que** le groupe aliphatique R₁ comprend une double liaison.

5. Procédé de production de mélanges de caoutchouc selon la revendication 4, **caractérisé en ce que** l'agent tensioactif de formule moléculaire (I) est le composé CH₃(CH₂)₇CHCH(CH₂)₇CONHCH₂COO⁻X⁺ ou le composé CH₂CH(CH₂)₈CONHCH₂COO⁻ X⁺.

6. Procédé de production de mélanges de caoutchouc selon la revendication 1, **caractérisé en ce que** le cation métallique X⁺ est Na⁺.

7. Mélange de caoutchouc comprenant une charge renforçante à grande surface, **caractérisé en ce qu'**il est produit en utilisant le procédé selon l'une des revendications précédentes.

8. Mélange de caoutchouc selon la revendication 7, **caractérisé en ce que** ladite charge renforçante est de la silice.

9. Mélange de caoutchouc selon la revendication 8, **caractérisé en ce que** la silice a une surface de contact supérieure à 220 m²/g et une taille de particule inférieure à 0,1 µm.

10. Pneumatique, **caractérisé en ce qu'**il comprend au moins une partie fabriquée à partir du mélange selon l'une des revendications 7 à 9.
